Europäisches Patentamt

European Patent Office

Office européen des brevets

(19)

(11) **EP 0 797 546 B1**

(12) **EUROPÄISCHE PATENTSCHRIFT**

(45) Veröffentlichungstag und Bekanntmachung des Hinweises auf die Patenterteilung:
**28.04.1999  Patentblatt 1999/17**

(21) Anmeldenummer: **95901263.4**

(22) Anmeldetag: **01.12.1994**

(51) Int Cl.⁶: **C02F 3/32**, E04H 4/12

(86) Internationale Anmeldenummer:
**PCT/AT94/00183**

(87) Internationale Veröffentlichungsnummer:
**WO 96/16910 (06.06.1996 Gazette 1996/26)**

(54) **KLÄRTEICH**

CLARIFICATION POOL

BASSIN DE CLARIFICATION

(84) Benannte Vertragsstaaten:
**AT BE CH DE DK ES FR GB GR IE IT LI LU MC NL PT SE**

(43) Veröffentlichungstag der Anmeldung:
**01.10.1997  Patentblatt 1997/40**

(73) Patentinhaber: **Lehnert, Norbert**
**5022 Rombach/Aarau (CH)**

(72) Erfinder: **Kub, Ulrich**
**4720 Neumarkt/Hausruck/AT (DE)**

(74) Vertreter: **Rottmann, Maximilian R. et al**
**c/o Rottmann, Zimmermann + Partner AG**
**Glattalstrasse 37**
**8052 Zürich (CH)**

(56) Entgegenhaltungen:
| | |
|---|---|
| AT-A- 393 285 | DE-A- 3 941 211 |
| DE-A- 4 226 660 | DE-U- 9 304 306 |

**Beschreibung**

Die Erfindung betrifft einen Klärteich zur biologischen Reinigung von Wasser, bestehend aus einer dichten Begrenzungsschicht zur Aufnahme des zu reinigenden Wassers und der erforderlichen organischen und anorganischen Materialien sowie der zugehörigen Bepflanzung, wobei in dem Teich ein Schacht vorgesehen ist, der sich von der Sohle des Teiches nach unten erstreckt und in den ein Zulauf für das zu reinigende Wasser mündet, und wobei eine Ausströmöffnung für das gereinigte Wasser vorgesehen ist.

Es sind seit einiger Zeit Teiche bekannt, die einerseits Abschnitte aufweisen, die zum Baden oder Schwimmen geeignet sind, und die andererseits Abschnitte aufweisen, in denen das Wasser durch eine entsprechende Fauna und Flora biologisch gereinigt wird. Es hat sich jedoch herausgestellt, daß mit solchen Anlagen eine gewisse Trübung des Wassers nicht vermeidbar ist. Um diesen Nachteil zu beheben, wurde vorgeschlagen, den Klärbereich vom Schwimmbereich räumlich zu trennen und mit einer Pumpe eine Umwälzung des Wassers zwischen dem Schwimmbereich und dem Klärbereich durchzuführen.

Aus der AT-B 393 285 ist eine Badeteichanlage bekannt, die einen solchen Aufbau aufweist. Dabei ist ein Bodenablauf eines Badeteiches mit einem Absetzschacht verbunden, der mittig in einem Sekundärteich angeordnet ist, und der sich von diesem nach unten hin erstreckt. Der Sekundärteich ist unten mit einer Begrenzungsschicht versehen, die etwa aus einer Teichfolie bestehen kann, die entsprechend verschweißt ist, um die Form des Teiches zu ergeben. Der Sekundärteich ist durch entsprechende Bepflanzung so ausgebildet, daß eine Klärung und Reinigung des Wassers erreicht werden kann. Weiters ist in dem Sekundärteich die Saugöffnung einer Pumpe vorgesehen, die das gereinigte Wasser zum Badeteich zurückführt. Eine solche Lösung stellt einen wesentlichen Fortschritt gegenüber den einteiligen Anlagen dar, es hat sich jedoch gezeigt, daß die Reinigungswirkung auch hier nicht optimal ist.

In der DE-A-42 26 660 ist ein Filter für Teichwasser offenbart, welcher ein Filtergehäuse in Form einer Wanne zur Aufnahme von zwei Schichten von Filtermaterial aufweist. Die beiden Schichten sind mehrheitlich aus Kies aufgebaut, wobei die obere Schicht zur Aufnahme von Pflanzen vorgesehen ist. Der Filter wird vom Wasser von unten nach oben durchströmt, so dass sich eine Reinigungsstrecke ergibt, welche im wesentlichen der vertikalen Ausdehnung des Filters bzw. der Tiefe des Filtergehäuses entspricht.

Aus der DE-U-93 04 306 ist ein Teichfilter bekannt, welcher aus einer Mehrzahl von Teichfilterkästen besteht. Die Teichfilterkästen sind in einzelne Parzellen zum Einsetzen von Jungpflanzen unterteilt. Der modulare Aufbau eines solchen Teichfilters soll es ermöglichen, diesen an beliebige Teichgrössen und Formen anpassen zu können.

Aufgabe der Erfindung ist es, diese Nachteile zu vermeiden Es soll insbesonders ein Klärteich geschaffen werden, der eine im Verhältnis zu seiner Fläche möglichst große Reinigungswirkung aufweist, und der dazu geeignet ist, Wasser höchster Reinheit abzugeben. Es soll somit sowohl die Quantität als auch die Qualität der Reinigung gesteigert werden. Obgleich die Erfindung primär in Hinblick auf Badeteichanlagen konzipiert worden ist, ist es jedoch klar, daß ein erfindungsgemäßer Klärteich auch in anderem Zusammenhang, so etwa zur Reinigung von Abwasser verwendbar ist.

Erfindungsgemäß wird dies durch die Merkmale des Anspruchs 1 erreicht.

Wesentlich an der Erfindung ist die Erkenntnis, daß zur Erzielung einer verbesserten Reinigungswirkung eine gewisse Strömungsgeschwindigkeit des Wassers im Verhältnis zu seiner Verweilzeit im Klärteich erforderlich ist. Dies wird dadurch erreicht, daß der Abstand zwischen Zulauf und Ausströmöffnung möglichst groß gemacht wird, wobei der Teich eine längliche Form aufweisen soll. Es muß lediglich ein gewisser Mindestabstand des Schachtes und der Abströmöflhung vom Rand des Teiches berücksichtigt werden.

Es ist im Rahmen der Erfindung keineswegs notwendig, daß der Teich rechteckig oder oval ist. Es sind auch Ausbildungen möglich, die einem naturnahen Erscheinungsbild entsprechen, und entsprechende Krümmungen aufweisen. Durch den relativ großen Abstand zwischen Zulauf und Ausströmöffnung wird eine optimale Durchströmung der in dem Teich vorgesehenen Substratschichten erreicht.

Als Längserstreckung wird allgemein der Abstand der beiden am weitesten entfernten Punkte des Randes des Teiches verstanden. Falls jedoch der Teich so stark gekrümmt ist, daß die Verbindungslinie zwischen diesen beiden Punkten nicht vollständig innerhalb des Teiches verläuft, so soll als Längserstreckung die Länge der kürzesten Verbindung zwischen diesen beiden Punkten verstanden werden die vollständig innerhalb des Teiches verläuft. Das oben Gesagte gilt sinngemäß auch für Teiche, die durch Strömungshindernisse, wie etwa Trennwände so abgeteilt sind, daß sich die Länge des Strömungsweges zwischen dem Schacht und der Ausströmöffnung im Vergleich zu ihrem geometrischen Abstand vergrößert.

Es hat sich herausgestellt, daß die Reinigungswirkung besonders günstig ist, wenn die Längserstreckung des Teiches mindestens dem 1,5-fachen, vorzugsweise mindestens dem 2,5-fachen der Erstreckung in einer Richtung quer zur Längserstreckung entspricht.

In einer besonders bevorzugten Ausführungsvariante der Erfindung ist vorgesehen, daß das Verhältnis des Quadrates des Abstandes zwischen der Ausströmöffnung und der Mitte des Schachtes zu der Fläche des Teiches größer als 1, vorzugsweise größer als 2 ist. Bei diesen Werten stellen sich optimal Strömungsgeschwindigkeiten des Wassers ein.

Gemäß der Erfindung ist im Inneren des Teiches eine Substratschicht vorgesehen, durch die das Wasser führbar ist, und die so ausgebildet ist, daß sie eine ausreichende Durchlässigkeit für die Strömung des Wassers aufweist, und daß sie ein Speichervermögen für Nährstoffe und Sauerstoff aufweist, um ein optimales biologisches Klima für die schadstoffabbauende Wirkung des Wurzelraumes zu erreichen. Dadurch wird ein algenfreies Gewässer für biologisch gereinigte Badeteiche und andere Anwendungen erreicht, da das zu reinigende Wasser die Substratschichte aufgrund ihrer Durchlässigkeit in ausreichender Weise durchströmt und durch den gespeicherten Sauerstoff und die enthaltenen Nährstoffe in einem optimalen biologischen Klima durch die schadstoffabbauende Wirkung des Wurzelraumes der Klärpflanzen gereinigt wird. Zu diesem Zweck werden natürlich vorkommende Zeolithe, d.h. kristalline, wasserhaltige Alkali- und/oder Erdalkali-Aluminiumsilikate eingesetzt. Zeolithe heben durch ihre absorbierende und ionisierende Wirkungsweise die in natürlichen Gewässern nicht vorhandene trennende Wirkung der Teichdichtungsfolie teilweise auf. Diese Wirkung könnte auch durch Beigabe von Lehm erreicht werden, dies hat jedoch den Nachteil, daß einerseits Lehm zur Bildung von hemmenden Schichten für die Wasserdurchlässigkeit führt und andererseits die plattige Lehmstruktur relativ schnell im fließenden Wasser abgebaut wird. Zeolithe sind hingegen ein nichtbindiges formstabiles Material.

Weiters wird in der vierten Schichte des Beispiels zusätzlich ein mit Metall-Sauerstoffverbindungen versetztes Mineralgranulat eingesetzt (Zeolith plus), welches durch die darin enthaltenen Wirkstoffkomponenten (Metall-Sauerstoffverbindungen) Fäulnis- bzw. anaerobe Prozesse verhindert, wodurch die Nährstoffaufnahmeprozesse der Mikroorganismen (Zooplankton) und der Teichpflanzen unterstützt werden.

Der Aufbau des Wurzdraumklärbeetes von der Oberkante des Absetzschachtes bis knapp unterhalb des Wasserspiegels:

1. (unterste) Schichte: Drainageschichte aus Grobschotter (Körnung 16/x mm), die als Reservoir für die Sicherstellung des Wasserkreislaufes sorgt,
Steinkörnung 16/x mm gewaschen
Schichtdicke mind. 50 cm
2. Grobschotterschichte mit eingemischtem saugfähigem Mineralgranulat (Zeolithe), Steinkörnung 16 - 32 mm gewaschen
Zeolith-Korngröße 5 - 10 mm, eingemischte Menge ca. 2 kg/m2
Schichtdicke mind. 10 cm
3. Rundkiesdrainageschichte als Feinfilter,
Körnung 8 - 16 mm, gewaschen
Schichtdicke mind. 10 cm
4. Feinsandschicht mit eingemischtem Mineralgranulat und Zugabe von mit Metall-Sauerstoflverbindungen versetztem Mineralgranulat,
Sandkörnung 0 - 4 mm gewaschen
Schichtdicke 7 cm
Menge beigemischtes Mineralgranulat (Zeolith) 1 kg/m$^2$ mit Korngröße 5 - 10 mm Menge beigemischtes mit Metall-Sauerstoffverbindungen versetztes Mineralgranulat (Zeolith plus): 150 g/m$^2$ mit Korngröße 5 - 10 mm
5. Substratabdeckung mit Feinkies,
Korngröße 4 - 8 mm, gewaschen,
Schichtdicke 3 - 5 cm

Um anaerobe Prozesse im Regenerationsrandbereich eines vorgelagerten Badeteichbeckens zu verhindern, wird auch hier der Substratauffbau im Pflanzenbereich von unten nach oben wie folgt hergestellt:

1. Sandschichte,
Korngroße 0 - 4 mm, gewaschen
Schichtdicke ca. 8 cm
Beimengung von Zeolithen 1,5 kg/m$^2$
Beimengung von Zeolith plus 50 g/m$^2$
2. Substratabdeckschichte mit Kies
Korngröße 8 - 16 mm, gewaschen
Schichtdicke ca. 7 cm

Es ist besonders vorteilhaft in einem zwischen der Austrittsöffnung des Klärteiches und der Einlaufstelle des Badeteiches angeordneten Bachlauf in die ca. 5 cm dicke Feinkiesschichte mit einer Körnung von 8 - 16 mm ebenfalls 1 kg/m$^2$ Zeolith gleichtmäßig einzumischen.

Weiters betrifft die Erfindung eine Badeteichanlage, die mit einem Klärteich, wie er oben beschrieben ist, versehen ist. Es hat sich als günstig herausgestellt, die Pumpe zum Umwälzen des Wassers in der Verbindungsleitung zwischen der Ausströmöffnung des Klärteiches und dem Zulauf des Badeteiches anzuordnen.

In einer besonders vorteilhaften Ausführungsvariante der vorliegenden Erfindung besitzt der Badeteich neben einem Bodenablauf eine Überlaufrinne, die entlang zumindest eines Teils des Badeteiches vorgesehen ist. Auf diese Weise können an der Oberfläche des Teiches schwimmende Verunreinigungen automatisch entfernt werden. In Zusammenhang mit der besonderen Ausbildung des Klärteiches ergibt sich dadurch ein besonders effizientes Reinigungssystem. Weiters kann die Überlaufrinne als bequemer Anschluß für ein Bodenreinigungsgerät verwendet werden um den Boden des Badeteiches, soweit dies erforderlich ist, von Verunreinigungen zu befreien.

Eine formschöne und technisch effiziente Ausbildung der Überlaufrinne ist gegeben, wenn die Überlaufrinne aus zwei Wandelementen aufgebaut ist, die im wesentlichen parallel zueinander sind und von denen ein Wandelement die äußere Begrenzung des Badeteiches bildet, wobei das andere Wandelement geringfügig niedriger ausgebildet ist, und daß am Boden der durch diese beiden Wandelemente gebildeten Rinne mindestens ein Wasserablauf vorgesehen ist.

In der Folge wird die Erfindung durch die in den Figuren dargestellten Ausführungsbeispiele näher erläutert. Die Figuren zeigen:

Fig. 1     Einen Grundriß einer Badeteichanlage mit einem erfindungsgemäßen Klärteich.
Fig. 2     Einen Schnitt nach Linie II - II von Fig. 1;
Fig. 3     Einen Schnitt nach Linie III - III von Fig. 1 und;
Fig. 4     Einen schematischen Grundriß einer Ausführungsvariante des Klärteiches.

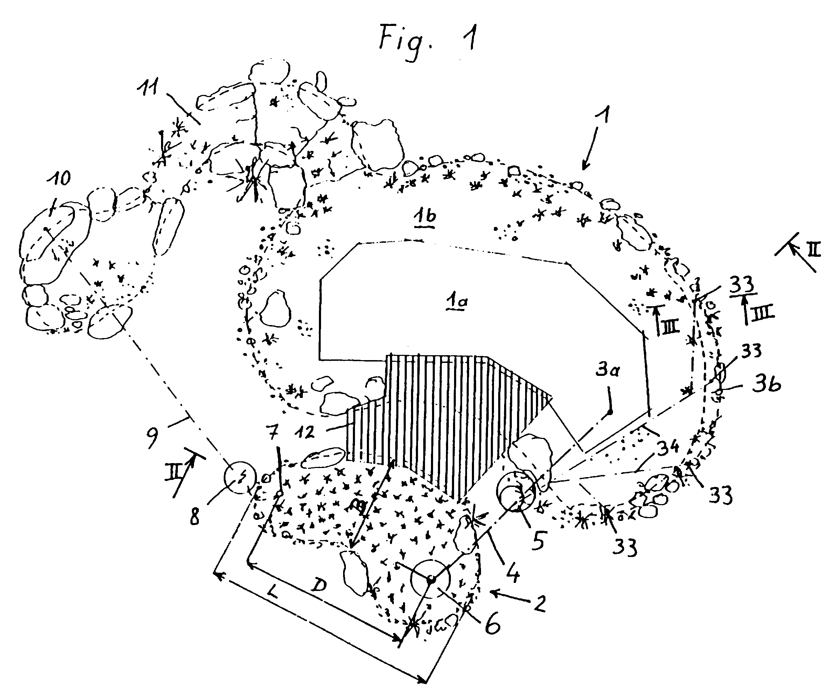

Aus dem Grundriß von Fig. 1 ist der grundsätzliche Aufbau einer Badeteichanlage ersichtlich. Der Badeteich 1 setzt sich aus einem zentralen Schwimmbereich la und einem Randbereich 1b zusammen, der als Regenerationsbereich dient. Das Wasser aus dem Badeteich 1 wird über einen Bodenablauf 3a und einer Überlaufrinne 3b in eine Rohrleitung 4 geführt, in deren Verlauf für die Wartung ein Revisionsschacht 5 vorgesehen ist. Ein etwa nierenförmig ausgebildeter Klärteich 2 besitzt in einem Endbereich einen Schacht 6, in den die Leitung 4 mündet. Der Schacht 6 dient als Schlammwammelschacht, in dem sich im Wasser mitgeführte Partikel durch Sedimentation absetzten können. Im gegenüberliegenden Endbereich des Klärteichs 2 ist eine Ausströmöffnung 7 vorgesehen, die mit einer Pumpe 8 in Verbindung steht, die das gereinigte Wasser durch die Ausströmöffnung 7 ansaugt und über eine Rohrleitung 9 zu einem Quellstein 10 führt. Von diesem Quellstein 10 strömt das Wasser über einen Bacheinlauf 11 in den Badeteich 1 zurück, wodurch der Kreislauf des Wassers geschlossen ist. Zwischen dem Badeteich 1 und dem Klärteich 2 kann ein Steg 12 vorgesehen sein.

Als Längserstreckung L des Klärteiches 2 wird der Abstand der am weitesten entfernten Punkte des Randes des Teiches verstanden. Der Abstand D zwischen der Mitte des Schachtes 6 und der Ausströmöffnung 7 entspricht im wesentlichen diesem Abstand L, mit der Einschränkung, daß aus technischen Gründen ein gewisser Mindestabstand zum Rand des Teiches erforderlich ist. Als Erstreckung in Querrichtung B wird im wesentlichen die Breite des Teiches verstanden

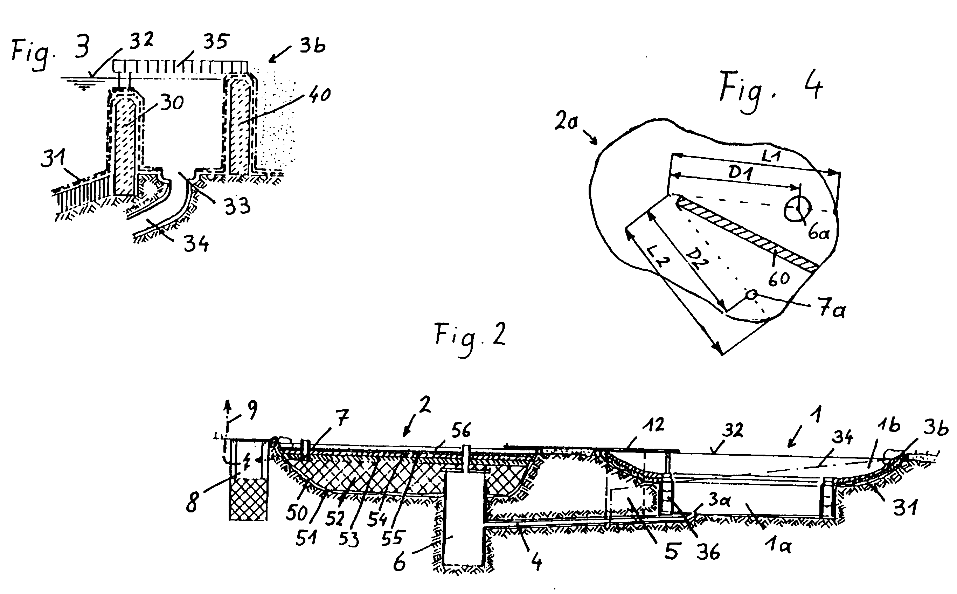

Fig. 3 zeigt den grundsätzlichen Aufbau der Überlaufrinne 3b. Eine erste Begrenzungswand 30 ist aus einer Betonleiste gebildet, die mit der Teichfolie 31 überzogen ist. Parallel zur Leiste 30 ist eine weitere Begrenzungsleiste 40 angeordnet, deren Oberkante etwas höher liegt als die, der Begrenzungsleiste 30. Der Wasserspiegel 32 des Badeteiches 1 liegt etwa zwischen der Oberkante der Begrenzungsleiste 30 und der Oberkante der Begrenzungsleiste 40. Die Breite der Überlaufrinne 3b sollte mindestens 35 cm betragen, die Tiefe mindestens 10 cm. Am tiefsten Punkt der Überlaufrinne 3b ist eine Ablauföffnung 33 vorgesehen, die über eine Leitung 34 mit der Leitung 4 verbunden ist, die zum Schacht 6 führt. Bei entsprechender Länge der Überlaufrinne 3b können selbstverständlich mehrere Abschnitte vorgesehen, die jeweils mit einer Ablautöffnung 33 jeweils versehen sind. Die Teichfolie 31 wird über die äußere Begrenzungsleiste 40 gezogen und an der Außenseite mit Gartengestaltungsmaterial (Erde, Sand, oder Terrassenplatten) festgehalten. Aus optischen Gründen kann die Überlaufrinne 3b mit einer Abdeckung 35 versehen sein.

Um das Verhältnis der Wassermenge, die durch den Bodenablauf 3a des Badeteiches 1 ausströmt, zu der Wassermenge, die durch die Überlaufrinne 3b ausströmt, regulieren zu können, sind in den Leitungen 34 und 4 in bekannter Weise entsprechende Schieber oder Ventile (nicht dargestellt) angeordnet, mit denen die Strömung in diesen Leitungen gedrosselt oder abgesperrt werden kann.

Der Randbereich des Badeteiches 1 wird, wie in der Fig. 2 dargestellt, in seiner Form weitgehend einem natürlichen Gewässer nachgebildet. Die Teichfolie 31 stellt dabei eine dichte Begrenzungsschicht dar, die das Versickern von Wasser verhindert. Der eigentliche Schwimmbereich 1a wird durch eine Mauer 36 begrenzt, deren Oberkante deutlich unterhalb der Wasseroberfläche 32 liegt. Die Ablaufleitung 4 besitzt ein Gefälle von mindestens 10 % zum Schacht 6 hin.

Der Klärteich 2 besitzt oberhalb der Teichfolie 50 folgende Schichten: Eine Mineralgranulat-Bodeneinstreuungs-Schicht 51 in einer Menge von etwa 1 kg/m$^2$ und einer Korngröße von 5 - 10 mm; eine Grundwasserschichte 52 aus grobem Schotter mit einer Körnung von mindestens 16 mm, die mindestens 15 cm dick ausgeführt ist; eine Grobschotter-Schicht 53 mit eingemischtem Mineralgranulat (Zeolithe) mit einer Korngröße von 16 - 32 mm; eine Rundkornkies-Drainage-Schicht 54 mit einer Korngröße von 8 - 16 mm; eine Feinsand-Schicht 55 mit eingemischtem Mineralgranulat und eine Substratabdeckung 56 aus Feinkies, die die Bepflanzung des Klärteiches in dekorativer Weise abdeckt. Die Bepflanzung muß ausreichend dicht sein, um eine entsprechende Reinigungswirkung zu erzielen. Vorteilhaft haben sich stark rhizombildende Pflanzen, beispielsweise Rohrkolben und Schilf mit einer Pflanzendichte von mindestens 5 Stück pro m$^2$ erwiesen.

Bei der Ausführungsvariante von Fig. 4 ist der Klärteich 2a mit einer Trennwand 60 versehen, die als Strömungshindernis dient, um den Strömungsweg zwischen dem Schacht 6a und der Ausströmöffnung 7a zu verlängern. Als Abstand D wird in diesem Fall die Länge des kürzesten Linienzuges betrachtet, der diese beiden Punkte miteinander verbindet und der vollständig innerhalb des Teiches 2a liegt (ausgenommen die Trennwand 60). Somit gilt:

$$D = D_1 + D_2$$

Analog gilt:

$$L = L_1 + L_2$$

Mit der vorliegenden Erfindung ist eine besonders effiziente Reinigung des Wassers möglich, wobei auch eine große Stabilität des Biotops gegeben ist.

**Patentansprüche**

1. Klärteich zur biologischen Reinigung von Wasser, bestehend aus einer dichten Begrenzungsschicht zur Aufnahme des zu reinigenden Wassers und der erforderlichen organischen und anorganischen Materialien sowie der zugehörigen Bepflanzung, wobei in dem Teich (2) ein Schacht (6) vorgesehen ist, der sich von der Sohle des Teichs (2) nach unten erstreckt und in den Zulauf für das zu reinigende Wasser mündet, und wobei eine Ausströmöffnung (7) für das gereinigte Wasser vorgesehen ist, **dadurch gekennzeichnet,** dass der Teich (2) eine Längserstreckung (L) aufweist, die grösser als die Erstreckung in einer Richtung quer dazu ist, und dass der Schacht (6) in einem Endbereich des Teiches angeordnet ist und die Ausströmöffnung (7) in dem anderen Endbereich angeordnet ist, so dass der Abstand (D) zwischen der Mitte des Schachtes (6) und der Ausströmöffnung (7) im wesentlichen der Längserstreckung (L) des Teiches (2) entspricht, und dass im Innern des Teiches (2a) eine aus mehreren Einzelschichten zusammengesetzte Substratschicht mit einem Speichervermögen für Nährstoffe und Sauerstoff vorgesehen ist, durch die das Wasser führbar ist, wobei die Einzelschichten in Lagen übereinander angeordnet sind und die Körnung der einzelnen Schichten von unten nach oben im wesentlichen abnimmt und wobei der Substratschicht Zeolithe beigemischt sind.

2. Klärteich nach einem der vorhergehenden Ansprüche, dadurch gekennzeichnet, dass die Ausströmöffnung (7) mit einer Pumpe (8) verbunden ist.

3. Klärteich nach Anspruch 1 oder 2, dadurch gekennzeichnet, dass die Längserstreckung (L) des Teiches (2) mindestens dem 1,5-fachen, vorzugsweise dem 2,5 fachen der Erstreckung (B) in einer Richtung quer zur Längserstreckung entspricht.

4. Klärteich nach einem der vorhergehenden Ansprüche, dadurch gekennzeichnet, dass das Verhältnis des Quadrates des Abstandes (D) zwischen der Ausströmöffnung (7) und der Mitte des Schachtes (6) zu der Fläche des Teiches grösser als 1, vorzugsweise grösser als 2 ist.

5. Klärteich nach einem der vorhergehenden Ansprüche, dadurch gekennzeichnet, dass die Substratschicht von unten nach oben aus folgenden Einzelschichten besteht:

> Drainageschicht (52) aus Grobschotter;
> Grobschotterschichte (53) mit eingemischtem saugfähigem Mineralgranulat (Zeolithe);
> Rundkies-Drainageschichte (54) als Feinfilter;
> Feinsandschicht (55) mit eingemischtem Mineralgranulat und Zugabe von mit Metall-Sauerstoffverbindungen versetztem Mineralgranulat;
> Substratabdeckung (56) mit Feinkies.

6. Badeteichanlage, bestehend aus einem Badeteich (1) mit mindestens einem Ablauf (3a, 3b) für das Wasser, einem Klärteich (2) nach einem der Ansprüche 1 bis 5, dessen Zulauf mit einem Ablauf (3a, 3b) des Badeteiches (1) verbunden ist, und dessen Ausströmöffnung (7) mit einem Zulauf (10, 11) für den Badeteich verbunden ist, sowie mit einer Pumpe (8) zum Umwälzen des Wassers zwischen dem Badeteich (1) und dem Klärteich (2), wobei diese Pumpe (8) vorzugsweise in der Verbindungsleitung (9) zwischen der Ausströmöffnung (7) des Klärteiches (2) und dem Zulauf (10, 11) des Badeteiches (1) angeordnet ist.

7. Badeteichanlage nach Anspruch 6, dadurch gekennzeichnet, daß der Ablauf des Badeteiches (1) aus einem Boden-Ablauf (3a), sowie aus einer Überlaufrinne (3b) besteht, die entlang zumindest eines Teiles des Umfangs des Badeteiches (1) vorgesehen ist.

8. Badeteichanlage nach Anspruch 7, dadurch gekennzeichnet, daß die Überlaufrinne (3b) aus zwei Wandelementen (30, 40) aufgebaut ist, die im wesentlichen parallel zueinander sind und von denen ein Wandelement (40) die äußere Begrenzung des Badeteiches bildet, wobei das andere Wandelement (30) geringfügig niedriger ausgebildet ist, und daß am Boden der durch diese beiden Wandelemente (30, 40) gebildeten Rinne (3b) mindestens ein Wasserablauf (33) vorgesehen ist.

9. Badeteichanlage nach einem der Ansprüche 7 oder 8, dadurch gekennzeichnet, daß die Wandelemente (30, 40) aus Rasenbegrenzungsplatten aufgebaut sind, über die eine den Boden des Badeteiches bildende Teichfolie (31) gezogen ist.

10. Badeteichanlage nach einem der Ansprüche 6 bis 9, dadurch gekennzeichnet, daß das Volumen des Klärteiches (2) gleich oder größer ist als das Nettovolumen des Schwünmbereiches des Badeteiches (1).

**Claims**

1. Clarification pool for the biological cleaning of water, comprising a dense boundary layer for receiving the water which is to be cleaned and the necessary organic and inorganic materials as well as the associated plant life, there being provided in the pool (2) a shaft (6) which extends downwards from the bottom of the pool (2) and opens out into the inflow for the water which is to be cleaned, and there being provided a discharge opening (7) for the cleaned water, characterized in that the pool (2) has a longitudinal extent (L) which is greater than the extent in a direction transverse to the longitudinal extent, and in that the shaft (6) is arranged in one end region of the pool and the discharge opening (7) is arranged in the other end region, with the result that the distance (D) between the centre of the shaft (6) and the discharge opening (7) essentially corresponds to the longitudinal extent (L) of the pool (2), and in that provided in the interior of the pool (2a) is a substrate layer which is made up of a plurality of individual layers, has a storage capacity for nutrients and oxygen and through which the water can be routed, it being the case that the individual layers are arranged in layers one above the other and the grain size of the individual layers essentially decreases from bottom to top, and the substrate layer has zeolites mixed in it.

2. Clarification pool according to Claim 1, characterized in that the discharge opening (7) is connected to a pump (8).

3. Clarification pool according to Claim 1 or 2, characterized in that the longitudinal extent (L) of the pool (2) corresponds to at least 1.5 times, preferably 2.5 times, the extent (B) in a direction transverse to the longitudinal extent.

4. Clarification pool according to one of the preceding claims, characterized in that the ratio of the square of the distance (D) between the discharge opening (7) and the centre of the shaft (6) to the surface area of the pool is greater than 1, preferably greater than 2.

5. Clarification pool according to one of the preceding claims, characterized in that, from bottom to top, the substrate layer comprises the following individual layers:

   a drainage layer (52) made of coarse crushed stone;
   coarse-crushed-stone layers (53) with absorbent mineral granules (zeolites) mixed in;
   round-gravel drainage layers (54) as a fine filter;

   a fine-sand layer (55) with mineral granules mixed in and the addition of mineral granules mixed with metal/oxygen compounds;
   a substrate covering (56) with fine gravel.

6. Bathing-pool installation comprising a bathing pool (1) with at least one outflow (3a, 3b) for the water, a clarification pool (2) according to one of Claims 1 to 5, of which the inflow is connected to an outflow (3a, 3b) of the bathing pool (1), and of which the discharge opening (7) is connected to an inflow (10, 11) for the bathing pool, and with a pump (8) for circulating the water between the bathing pool (1) and the clarification pool (2), said pump (8) preferably being arranged in the connecting line (9) between the discharge opening (7) of the clarification pool (2) and the inflow (10, 11) of the bathing pool (1).

7. Bathing-pool installation according to Claim 6, characterized in that the outflow of the bathing pool (1) comprises a ground outflow (3a) and an overflow channel (3b) which is provided along at least part of the periphery of the bathing pool (1).

8. Bathing-pool installation according to Claim 7, characterized in that the overflow channel (3b) is constructed from two wall elements (30, 40) which are essentially parallel to one another and of which one wall element (40) forms the outer boundary of the bathing pool, the other wall element (30) being designed to be slightly lower, and in that at least one water outflow (33) is provided on the base of the channel (3b) formed by these two wall elements (30, 40).

9. Bathing-pool installation according to either of Claims 7 and 8, characterized in that the wall elements (30, 40) are constructed from turf-bounding slabs over which a pool sheeting (31), which forms the base of the bathing pool, is drawn.

10. Bathing-pool installation according to one of Claims 6 to 9, characterized in that the volume of the clarification pool (2) is equal to or greater than the net volume of the swimming area of the bathing pool (1).

**Revendications**

1. Bassin d'épuration pour l'épuration biologique d'eau, constitué d'une couche de délimitation dense servant à recevoir l'eau à épurer et les matières organiques et non organiques nécessaires, ainsi que l'implantation de plantes associée, tandis que, dans le bassin (2), il est prévu une fosse (6) qui s'étend vers le bas à partir du fond du bassin (2) et dans laquelle débouche une arrivée prévue pour l'eau à épurer, un orifice d'écoulement de sortie (7) étant prévu pour l'eau épurée, caractérisé en ce que le bassin (2) présente une étendue longitudinale (L) qui est supérieure à l'étendue suivant une direction transversale à celle-ci, en ce que la fosse (6) est disposée dans une zone d'extrémité du bassin et l'orifice d'écoulement de sortie (7) est disposé dans l'autre zone d'extrémité, de sorte que la distance (D) entre le centre de la fosse (6) et l'orifice d'écoulement de sortie (7) correspond sensiblement à l'étendue longitudinale (L) du bassin (2), et en ce qu'à l'intérieur du bassin (2a), il est prévu une couche de substrat qui est composée de plusieurs couches individuelles et présente une capacité d'accumulation pour des substances nutritives et l'oxygène et à travers laquelle il est possible de faire passer l'eau, tandis que les couches individuelles sont disposées en épaisseurs superposées, la ganulométrie des différentes couches diminue sensiblement de bas en haut et des zéolithes sont mélangées à la couche de substrat.

2. Bassin d'épuration suivant la revendication 1, caractérisé en ce que l'orifice d'écoulement de sortie (7) est relié à une pompe (8).

3. Bassin d'épuration suivant la revendication 1 ou 2, caractérisé en ce que l'étendue longitudinale (L) du bassin (2) correspond au moins à 1,5 fois, de préférence à 2,5 fois, l'étendue (B) suivant une direction transversale par rapport à l'étendue longitudinale.

4. Bassin d'épuration suivant l'une des revendications précédentes, caractérisé en ce que le rapport du carré de la distance (D) entre l'orifice d'écoulement de sortie (7) et le centre de la fosse (6) à la surface du bassin est supérieur à 1, de préférence supérieur à 2.

5. Bassin d'épuration suivant l'une des revendications précédentes, caractérisé en ce que la couche de substrat est constituée, de bas en haut, des couches individuelles suivantes :

  couche de drainage (52) en gros gravier,
  couches de gros gravier (53) avec un granulat minéral absorbant (zéolithe) qui y est mélangé,
  couches de drainage de gravier rond (54) servant de filtre fin,
  couche de sable fin (55) avec un granulat minéral qui y est mélangé et avec addition d'un granulat minéral mélangé avec des composés métal-oxygène,
  recouvrement de substrat (56) comportant du gravier fin.

6. Installation de bassin de baignade, constitué d'un bassin de baignade (1) comportant au moins une évacuation (3a, 3b) pour l'eau, un bassin d'épuration (2) suivant l'une des revendications 1 à 5, dont une arrivée est reliée à une évacuation (3a, 3b) du bassin de baignade (1) et dont un orifice d'écoulement de sortie (7) est relié à une arrivée (10, 11) prévue pour le bassin de baignade, et comprenant également une pompe (8) servant à recycler l'eau entre le bassin de baignade (1) et le bassin d'épuration (2), cette pompe (8) étant de préférence disposée dans la tuyauterie de liaison (9) entre l'orifice d'écoulement de sortie (7) du bassin d'épuration (2) et l'arrivée (10, 11) du bassin de baignade (1).

7. Installation de bassin de baignade suivant la revendication 6, caractérisée en ce que l'évacuation du bassin de baignade (1) est constituée d'une évacuation de fond (3a) et d'un canal de trop-plein (3b) qui est prévu le long d'au moins une partie de la périphérie du bassin de baignade (1).

8. Installation de bassin de baignade suivant la revendication 7, caractérisée en ce que le canal de trop-plein (3b) les constitué de deux éléments de paroi (30, 40) qui sont sensiblement parallèles l'un à l'autre et dont un élément de paroi (40) forme la délimitation extérieure du bassin de baignade, tandis que l'autre élément de paroi (30) est réalisé légèrement plus bas, et en ce qu'au moins une évacuation d'eau (33) est prévue au fond du canal (3b) formé par ces deux éléments de paroi (30, 40).

9. Installation de bassin de baignade suivant l'une des revendications 7 ou 8, caractérisée en ce que les éléments de paroi (30, 40) sont constitués de plaques de délimitation de pelouse par-dessus lesquelles est tirée une feuille de bassin (31) formant le fond du bassin de baignade.

10. Installation de bassin de baignade suivant l'une des revendications 6 à 9, caractérisée en ce que le volume du bassin d'épuration (2) est égal ou supérieur au volume net de la zone de natation du bassin de baignade (1).

# Fig. 1

EP 0 797 546 B1